(19) Europäisches Patentamt
European Patent Office
Office européen des brevets

(11) Veröffentlichungsnummer: **0 307 702 B1**

(12) **EUROPÄISCHE PATENTSCHRIFT**

(45) Veröffentlichungstag der Patentschrift: **07.10.92**

(51) Int. Cl.$^5$: **C07F 9/50**

(21) Anmeldenummer: **88114040.4**

(22) Anmeldetag: **29.08.88**

# (54) Verfahren zur Herstellung von Phosphanen.

(30) Priorität: **18.09.87 DE 3731424**

(43) Veröffentlichungstag der Anmeldung:
**22.03.89 Patentblatt 89/12**

(45) Bekanntmachung des Hinweises auf die Patenterteilung:
**07.10.92 Patentblatt 92/41**

(84) Benannte Vertragsstaaten:
**BE CH DE FR GB IT LI NL**

(56) Entgegenhaltungen:
**DE-A- 2 727 390**

**HOUBEN-WEYL, Methoden der Organischen Chemie, Band XII/1, 1963, Seite 17, herausgegeben von E. MÜLLER, Georg Thieme Verlag, Stuttgart, DE**

(73) Patentinhaber: **HOECHST AKTIENGESELLSCHAFT**
**Postfach 80 03 20**
**W-6230 Frankfurt am Main 80(DE)**

(72) Erfinder: **Stelzer, Othmar, Prof. Dr.**
**Riedelstrasse 21**
**W-5600 Wuppertal(DE)**
Erfinder: **Langhans, Klaus-Peter**
**Mozartstrasse 38**
**W-5600 Wuppertal(DE)**
Erfinder: **Svara, Jürgen, Dr.**
**Mainstrasse 36**
**W-5000 Köln(DE)**
Erfinder: **Weferling, Norbert, Dr.**
**Schaesbergstrasse 13**
**W-5030 Hürth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 307 702 B1

**Beschreibung**

Die vorliegende Erfindung betrifft ein Verfahren zur Herstellung von Phosphanen der allgemeinen Formeln

$R_nPH_{3-n}$ (I)

oder

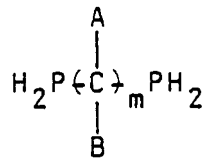

(II)

in denen R eine gradkettige oder verzweigte Alkylgruppe mit 1 bis 24 C-Atomen oder eine Cycloalkyl-, Benzyl- bzw. Allylgruppe darstellt, n 1 oder 2 ist, m 2, 3 oder 4 entspricht und A und B gleich oder verschieden sind und entweder die Bedeutung von R, Wasserstoff oder einer Phenylgruppe haben.

Dieses Verfahren beruht auf der Umsetzung von Phosphorwasserstoff in Gegenwart eines Katalysators mit Reagentien der allgemeinen Formeln RHal oder $Hal(C(A)(B))_mHal$, in denen R, A, B und m die angegebenen Bedeutungen haben und Hal für Chlor oder Brom steht.

Organophosphorverbindungen gewinnen zunehmend technische Bedeutung als Herbizide, Liganden in Katalysatoren zur Hydroformylierung (Oxo-Synthese), Phasen-Transfer-Katalysatoren (als Phosphoniumsalze) und Extraktionsmittel (als tert. Phosphanoxide und Phosphinsäuren). Als Grundbaustein zur Synthese dieser Verbindungsklassen kann Phosphorwasserstoff verwendet werden, der mittels bekannter Verfahren leicht in technischen Mengen herstellbar ist.

Nach dem Stand der Technik sind Trialkylphosphane durch radikalinitiierte Addition von $PH_3$ an olefinische Doppelbindungen problemlos zugänglich.

Wesentlich schwieriger gestaltet sich die gezielte Herstellung von prim. und sek. Alkylphosphanen. Es hat daher nicht an Vorschlägen gefehlt, diese Phosphane zu gewinnen, wobei insbesondere die Umsetzung von $PH_3$ mit Alkylhalogeniden an Edelmetallkatalysatoren oder A-Kohle bereits versucht wurde (DE 24 07 461 A1 und DE-A-2 727 390). Allen bisher gefundenen Methoden hafteten Nachteile an, wie z.B. schlechte Ausbeuten oder unerwünschte Nebenprodukte, so daß eine technische Anwendung unterblieb.

Überraschenderweise wurde nun gefunden, daß sich die Nachteile der bekannten Verfahren vermeiden lassen, wenn man bei der Umsetzung von Phosphorwasserstoff mit Alkylhalogeniden als Katalysator ein Tetraalkylammonium- oder -phosphoniumsalz einsetzt und die Umsetzung in Gegenwart einer wäßrigen Alkalihydroxidlösung bei Temperaturen zwischen -20 und 200 °C und einem Überdruck von 0 bis 10 bar durchführt, wobei man pro Mol Hal jeweils mindestens ein Mol Alkalihydroxid einsetzt.

Vorteilhafte Ausgestaltungen des erfindungsgemäßen Verfahrens sind: daß in Anwesenheit inerter organischer Lösemittel gearbeitet wird; daß man die Reaktion bei Temperaturen zwischen 0 und 50 °C durchführt; daß die Katalysatoren in Konzentrationen von 0,1 bis 5 Mol-%, bezogen auf eingesetztes $PH_3$, verwendet werden; daß als inerte organische Lösemittel aliphatische oder aromatische Kohlenwasserstoffe mit 5 - 16 C-Atomen, einzeln oder im Gemisch, verwendet werden und daß als Alkalihydroxidlösung wäßrige NaOH oder KOH mit einer Konzentration von 50 - 70 Gew.% eingesetzt wird.

Der Phosphorwasserstoff wird dabei mit konzentrierter, wäßriger Alkalihydroxidlösung deprotoniert. Dieser Vorgang ist in entscheidender Weise vom Einsatz des Katalysators in Form eines Ammonium- oder Phosphoniumsalzes abhängig. Ohne einen solchen Katalysator findet die Umsetzung praktisch nicht statt. In manchen Fällen ist es vorteilhaft, ganz auf den Einsatz eines inerten organischen Lösemittels zu verzichten. Bei der Umsetzung von $PH_3$ mit Methylchlorid z. B. können die Reaktionsprodukte Methylphosphan und ggf. Dimethylphosphan nach erfolgter Umsetzung direkt durch Entspannen und nachfolgendes leichtes Erwärmen des Autoklaven gewonnen werden. In bekannter Weise gelingt die Isolierung in Form der H-Phosphoniumsalze, indem das Reaktionsgas durch Waschflaschen mit verd. HCl (absorbiert nur Methylphosphan) und/oder konz. HCl (absorbiert $(CH_3)_2PH$, $CH_3PH_2$ und $(CH_3)_3P$) geleitet wird. Dabei können in dem Gas gleichzeitig noch überschüssiges Methylchlorid und $PH_3$ enthalten sein. Durch Zusatz einer entsprechenden Menge Alkali-hydroxid können die Phosphane in kontrollierter Weise wieder freigesetzt werden.

Das erfindungsgemäße Verfahren eignet sich insbesondere zur Monoalkylierung von $PH_3$. Spezifität und

Einfachheit der Durchführung werden von keinem anderen bekannten Verfahren erreicht. Ferner gelangen nur relativ preiswerte Reagentien zum Einsatz. Doch ist auch die Herstellung von dialkylierten Produkten möglich, wenngleich dabei die Abtrennung und Rückführung von monoalkyliertem Produkt empfehlenswert ist. So läßt sich z. B. $(CH_3)_2PH$ erhalten, eine Verbindung, deren strukturelle Einfachheit im krassen Gegensatz zur Schwierigkeit ihrer bisherigen Herstellung steht.

Besonders in den Fällen, wo unter Normalbedingungen gasförmige Alkylhalogenide (Methylchlorid, Ethylchlorid) eingesetzt werden, ist es vorteilhaft, die Reaktion im Autoklaven unter Druck zu führen (Beispiele 1 - 3, Methode A). Prinzipiell lassen sich nach Methode A alle Umsetzungen durchführen (s. Beispiel 4).

Nach Methode B wird drucklos (= bei Normaldruck) oder nur mit so geringem Überdruck (250 mbar) gearbeitet, daß die Ansätze in normalen Glasapparaturen durchgeführt werden können.

Allgemeine Arbeitsbedingungen für Methode A (Mengenangaben s. Tab. 1).

$PH_3$ wurde in einem 5-l-Autoklaven bei -40 °C kondensiert. Danach fügte man das Alkylhalogenid hinzu, entweder ebenfalls durch Einkondensieren oder durch Einpumpen. Bei Kühlwassertemperatur wurde eine Lösung von 450 g KOH (85 %) in 300 g $H_2O$ (=52 % Gesamtkonzentration von KOH in $H_2O$) zugepumpt. Die Reaktion wurde gestartet, indem man entweder eine Lösung des Katalysators in Toluol oder Wasser in das Reaktionsgefäß dosierte. $PH_3$/Methylchlorid-Ansätze wurden so aufgearbeitet, daß man die Gasphase des Autoklaven über 2 Waschflaschen mit je 250 g konz. HCl entspannte. Dabei wurde der Autoklav bis auf 50 °C erwärmt. Anschließend pumpte man weitere 200 g $H_2O$ in den Reaktor und trennte die wäßrige von der organischen Phase (Ausnahme: Beispiel 3). Zur Analyse bzw. Gehaltsbestimmung wurden $^{31}P$-NMR-Spektren sowohl der Toluol-Phase als auch der HCl-Waschlösung vorgenommen sowie P-Elementaranalysen dieser Proben durchgeführt. In der KOH/$H_2O$-Phase konnte kein P nachgewiesen werden (< 0,1 %). Die $PH_3$/Methylchlorid-Umsetzungsprodukte sind durch folgende $^{31}P$-NMR-Daten charakterisiert:

| | |
|---|---|
| $CH_3PH_2$: | -161 ppm, $^1J_{PH}$ = 188 Hz, Triplett (in Toluol) |
| | -65,5 ppm (als $Me\overset{+}{P}H_3Cl^-$ in HCl/$H_2O$) |
| $(CH_3)_2PH$: | -99 ppm, $^1J_{PH}$ = 186 Hz, Dublett (in Toluol) |
| | - 34,5 ppm, $^1J_{PH}$ = 495 Hz, Triplett (als $Me_2\overset{+}{P}H_2Cl^-$ in HCl/$H_2O$) |
| $(CH_3)_3P$: | -62,6 ppm, (in Toluol) |
| | -5,8 ppm, $^1J_{PH}$ = 505 Hz, Dublett (als $Me_3\overset{+}{P}H\ Cl^-$ in HCl/$H_2O$) |
| $(CH_3)_4P^+Cl^-$: | +24 ppm (Toluol) |
| $(CH_3)_3P(:O)$: | +39 ppm (Toluol) |

Tabelle 1 Umsetzungen von $PH_3$ mit Alkylhalogeniden unter Druck

| Beispiel | $PH_3$ g (mol) | Alkylhalogenid g (mol) | Lösemittel | Reaktionsbedingungen | Produktverteilung HCl-Absorber-Lösung | Produktverteilung Toluol-Phase | Umsetzungsgrad | Produkte |
|---|---|---|---|---|---|---|---|---|
| 1 | 61 (1,8) | 60 (1,3) Methylchlorid | - | 2 h/15 - 20 °C<br>Pmax.: 9,1 bar<br>Enddruck: 5,0 bar<br>Katalysator: Tetraoctylphosphoniumbromid 10 g | $CH_3PH_2$: 94 Mol-%<br>$(CH_3)_2PH$: 5 Mol-%<br>Sonstige: < 1 Mol-% | - | >98 % bez. auf eingesetztes $CH_3Cl$ | $CH_3PH_2$: 56 g<br>$(CH_3)_2PH$: 4 g |
| 2 | 38 (1,1) | 261 (5,4) Methylchlorid | Toluol 450 ml | 2 h/15 - 25 °C<br>18 h/15 °C<br>Pmax.: 4,1 bar<br>Enddruck: 0,5 bar<br>Katalysator: $(C_4H_9)_3C_{16}H_{33}PBr$ 10 g in 50 ml Toluol | $CH_3PH_2$: 7,5 Mol-%<br>$(CH_3)_2PH$: 91 Mol-%<br>$(CH_3)_3P$: 1,5 Mol-%<br>$(CH_3)_4\overset{+}{P}Cl^-$: - | < 0,1 Mol-%<br>90,6 Mol-%<br>2,9 Mol-%<br>6,6 Mol-% | >99 % bez. auf eingesetztes $PH_3$ | $CH_3PH_2$: 2 g<br>$(CH_3)_2PH$: 63 g<br>$(CH_3)_3P$: 2 g<br>$(CH_3)_4PCl$: 4 g |
| 3 | 37 (1,1) | 153 (3,2) Methylchlorid | - | 5 h/15 - 15 °C<br>18 h/18 °C<br>Pmax.: 7,4 bar<br>Enddruck: 2,6 bar<br>10 g $(C_4H_9)_3C_{16}H_{33}PBr$ in $H_2O$/KOH gelöst | $CH_3PH_2$: 64 Mol-%<br>$(CH_3)PH$: 35 Mol-%<br>$(CH_3)_3P$: 0,5 Mol-% | - | 93 % bez. auf eingesetzes $PH_3$ | $CH_3PH_2$: 32 g<br>$(CH_3)_2P$: 23 g<br>$(CH_3)_3P$: 0,5 g |
| 4 | 71 (2,1) | 520 (1,8) Hexadecylbromid | Toluol 500 ml | 3 h/10 - 25 °C<br>3 h/80 °C<br>Pmax.: 8,8 bar<br>Enddruck: 0,8 bar<br>15 g $(C_4H_9)_3C_{16}H_{33}PBr$ | - | $C_{16}H_{33}PH_2$: 97 Mol-%<br>$^{31}P$-NMR: -139 ppm | 74 % bez. auf eingesetztes $PH_3$ | $C_{16}H_{33}PH_2$ ca. 389 g (84 % bez. auf RHal) |

Allgemeine Arbeitsbedingungen für Methode B (Beispiele 5 - 7)

Die in Tab. 2 angegebenen Mengen 56 %iger wäßriger Lösung von KOH wurden mit $[NBu_4]^+Cl^-$(Tetra-n-butylammonium-chlorid) versetzt. Nach Durchleiten von $N_2$ durch die Lösungen wurde $PH_3$ auf die

Lösung aufgeleitet (Überdruck 250 mbar) und das jeweilige Alkylierungsmittel bei 10 - 20 °C (Reaktionsbedingungen a) zugetropft. Nach Beendigung der Zugabe wurde 1 - 2 h bei 40 °C weitergerührt (Reaktionsbedingungen b), um eine vollständige Umsetzung des Alkylierungsmittels zu erreichen. Anschließend wurde die wäßrige Phase durch Zugabe von Wasser im Verhältnis 1 : 1 verdünnt und die organische getrennt, zweimal mit je 100 ml $H_2O$ gewaschen und über $Na_2SO_4$ getrocknet. Die fraktionierende Destillation lieferte die primären Phosphane. (Ansätze, Ausbeute, Reaktionsbedingungen s. Tab. 2)

Tabelle 2 Alkylierung von $PH_3$ mit RX unter Phasentransferkatalyse

| Beispiel | 5 | 6 | 7 |
|---|---|---|---|
| | $CH_3-(CH_2)_3-PH_2$ | 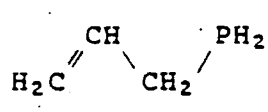 | 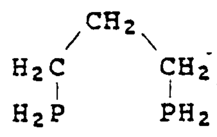 |
| RX g (mol) | $CH_3-(CH_2)_3-Cl$ 9,26 (0,1) | $H_2C=CH-CH_2-Cl$ 76,5 (1,0) | $Cl-(CH_2)_3Cl$ 28,2 (0,25) |
| $(C_4H_9)_4N^+Cl^-$ g (mol) | 2,8 (0,001) | 13,9 (0,05) | 7,0 (0,025) |
| 56 % KOH g (mol) | 20,0 (0,2) | 200,0 (2,0) | 100 (1,0) |
| Organ. Phase | 100 ml Pentan | 200 ml n-Octan | 200 ml Petrolether 40/60 |
| Reaktionsbedingungen | a) 1 h/20 °C b) 1 h/40 °C | a) 2 h/10 °C b) 1 h/40 °C | a) 1 h/20 °C b) 2 h/40 °C |
| Ausbeute g (%) | 7,9 (88) | 41,0 (55) | 24,0 (89) |
| Sdp. °C | 86 | 66 | 92/50 mbar |

## Patentansprüche

**1.** Verfahren zur Herstellung von Phosphanen der allgemeinen Formeln

$R_nPH_{3-n}$ (I)

oder

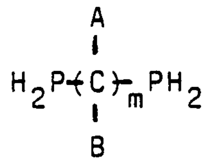 (II)

in denen R eine gradkettige oder verzweigte Alkylgruppe mit 1 bis 24 C-Atomen oder eine Cycloalkyl-, Benzyl-bzw. Allylgruppe darstellt,n 1 oder 2 ist, m 2, 3 oder 4 entspricht und A und B gleich oder verschieden sind und entweder die Bedeutung von R,Wasserstoff oder einer Phenylgruppe haben, durch Umsetzung von Phosphorwasserstoff in Gegenwart eines Katalysators mit Reagentien der allgemeinen Formeln R-Hal oder $Hal(C(A)(B))_m Hal$,in denen R, A, B und m die angegebenen Bedeutungen haben und Hal für Chlor oder Brom steht, dadurch gekennzeichnet, daß man als Katalysator ein Tetraalkylammonium- oder -phosphoniumsalz einsetzt und die Umsetzung in Gegenwart einer wäßrigen Alkalihydroxidlösung bei Temperaturen zwischen -20 und 200 °C und einem Überdruck von 0 bis 10 bar durchführt, wobei man pro Mol Hal jeweils mindestens ein Mol Alkalihydroxid einsetzt.

**2.** Verfahren nach Anspruch 1, dadurch gekennzeichnet, daß in Anwesenheit inerter organischer Lösemittel gearbeitet wird.

**3.** Verfahren nach Anspruch 1 oder 2, dadurch gekennzeichnet, daß man die Reaktion bei Temperaturen zwischen 0 und 50 °C durchführt.

**4.** Verfahren nach einem der Ansprüche 1 bis 3, dadurch gekennzeichnet, daß die Katalysatoren in Konzentrationen von 0,1 bis 5 Mol-%, bezogen auf eingesetztes $PH_3$, verwendet werden.

**5.** Verfahren nach einem der Ansprüche 2 bis 4, dadurch gekennzeichnet, daß als inerte organische Lösemittel aliphatische oder aromatische Kohlenwasserstoffe mit 5 - 16 C-Atomen, einzeln oder im Gemisch, verwendet werden.

**6.** Verfahren nach einem der Ansprüche 1 bis 5, dadurch gekennzeichnet, daß als Alkalihydroxidlösung wäßrige NaOH oder KOH mit einer Konzentration von 50 - 70 Gew.% eingesetzt wird.

## Claims

**1.** A process for the preparation of phosphanes of the formulae

$R_nPH_{3-n}$, (I)

or

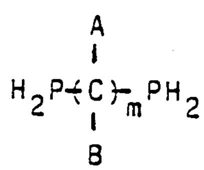 (II)

in which R represents a straight-chain or branched alkyl group having 1 to 24 carbon atoms or a cycloalkyl, benzyl or ally] group, n is 1 or 2, m corresponds to 2, 3 or 4 and A and B are identical or different and have either the meaning of R, hydrogen or a phenyl group, by reacting phosphane in the presence of a catalyst with reagents of the formula R-hal or $hal(C(A)(B))_m hal$, in which R, A, B and m have the meanings mentioned and hal stands for chlorine or bromine, which comprises using as a catalyst a tetraalkylammonium or tetraalkylphosphonium salt and carrying out the reaction in the presence of an aqueous alkali metal hydroxide solution at temperatures between -20 and 200 °C and at a positive pressure of 0 to 10 bar, in which process for each mole of hal at least 1 mole of alkali metal hydroxide is used.

2. The process as claimed in claim 1, wherein the reaction is carried out in the presence of inert organic solvents.

3. The process as claimed in claim 1 or 2, wherein the reaction is carried out at temperatures between 0 and 50 ° C.

4. The process as claimed in any of claims 1 to 3, wherein the catalysts are used in concentrations of 0.1 to 5 mole %, based on the phosphane used.

5. The process as claimed in any of claims 2 to 4, wherein the inert organic solvents used are aliphatic or aromatic hydrocarbons having 5 to 16 carbon atoms, individually or as a mixture.

6. The process as claimed in any of claims 1 to 5, wherein the alkali metal hydroxide solution used is aqueous NaOH or KOH having a concentration of 50 to 70 % by weight.

**Revendications**

1. Procédé de préparation de phosphanes de formule générale

$R_nPH_{3-n}$ (I)

ou

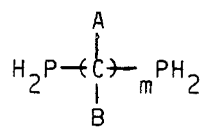

(II)

dans laquelle chacun des symboles R représente un groupe alkyle à chaîne droite ou ramifiée en $C_1$-$C_{24}$ ou un groupe cycloalkyle, benzyle ou allyle, n est égal à 1 ou 2, m est égal à 2, 3 ou 4 et A et B, ayant des significations identiques ou différentes, ont chacun l'une des significations de R ou représentent l'hydrogène ou un groupe phényle, par réaction du phosphure d'hydrogène en présence d'un catalyseur avec des composés de formule générale R-Hal ou $Hal(C(A)(B))_mHal$ dans laquelle R, A, B et m ont les significations indiquées ci-dessus et Hal représente le chlore ou le brome, caractérisé en ce que l'on utilise en tant que catalyseur un sel de tétraalkylammonium ou de tétraalkylphosphonium et on effectue la réaction en présence d'une solution aqueuse d'hydroxyde alcalin à des températures de -20 à 200 ° C, sous une pression manométrique de 0 à 10 bar en utilisant dans chaque cas au moins 1 mol d'hydroxyde alcalin par mole de Hal.

2. Procédé selon la revendication 1, caractérisé en ce que l'on opère en présence de solvants organiques inertes.

3. Procédé selon la revendication 1 ou 2, caractérisé en ce que l'on effectue la réaction à des températures de 0 à 50 ° C.

4. Procédé selon l'une des revendications 1 à 3, caractérisé en ce que l'on utilise les catalyseurs à des concentrations de 0,1 à 5 mol % par rapport à $PH_3$ mis en oeuvre.

5. Procédé selon l'une des revendications 2 à 4, caractérisé en ce que l'on utilise en tant que solvants organiques inertes des hydrocarbures aliphatiques ou aromatiques en $C_5$-$C_{16}$, isolément ou à l'état de mélange entre eux.

6. Procédé selon l'une des revendications 1 à 5, caractérisé en ce que l'on utilise en tant que solution d'hydroxyde alcalin une solution aqueuse de NaOH ou de KOH à une concentration de 50 à 70 % en poids.